# EUROPEAN PATENT APPLICATION

(11) **EP 3 009 973 A1**
(43) Date of publication of application: **20.04.2016**
(21) Application number: 15189254.4
(22) Date of filing: 12.10.2015
(51) Int. Cl.: G06Q 20/32, G06Q 20/20, G06Q 20/40, G06Q 20/42, G06Q 20/38

(54) **METHOD AND DEVICES FOR MOBILE WALLET MULTI-FACTOR AUTHENTICATION**

(30) Priority: 13.10.2014 IN 2915DE2014
(71) Applicant: Comviva Technologies Limited, Gurgao, Haryana 122001 (IN)
(72) Inventor: Soruban, Rajasekaran, 122001 Haryana (IN); Jain, Nitin, 122001 Haryana (IN); Chaudhary, Bhaskar, 122001 Haryana (IN); Reddy, P. Rajasekhara, 122001 Haryana (IN)
(74) Representative: Freischem & Partner Patentanwälte mbB

(57) **Abstract**

The invention provides methods and devices for authentication of transactions wherein a point of sale device sends a transaction identifier to a transaction verification system and a mobile device sends the transaction identifier or an irreversible one way hash value corresponding to the transaction identifier on an alternative communication path to the transaction verification system. In accordance with a preferred aspect, the mobile device transmits the transaction identifier or the irreversible one way hash value independent of the transmission by the POS device and more preferably, before the transaction between the POS device and the mobile device is complete. The process of message generation and transmission by the mobile device is substantially devoid of user intervention.

## Description

### Field of the Invention:

The invention belongs to the area of authenticating transactions in a system involving a point-of-sale device and a mobile device.

### Background of the Invention:

Security of mobile payments at the point-of-sale (POS) device is a critical component of successful adoption. As new technologies, platforms, and solutions for mobile POS payments enter the markets, efforts to efficiently manage security without complicating user experience becomes more important.

When it comes to proximity based mobile transactions which is made via host card emulation mode, there is no tamper resistant hardware element, like a secure element to securely protect sensitive assets (such as card details, PIN number or password, etc.). Typically software based security is deployed as any hardware based security involves higher cost, more deployment complexity for the card issuing banks. And hence to mitigate any fraud that might occur since sensitive data protected by software is not fool proof, typically a tokenization approach is used. In the tokenization approach instead of storing the real credit card details a temporary dynamic token that represents the card details is sent from the server (cloud or from the issuer bank or from payment schemes) to the wallet application in the mobile phone. This token is protected by the software based security. Such a token can be a restricted token like it would be limited to be used for only few transactions of valid only for few hours or only for certain payment value. Such restrictions ensure that even if a hacker steals the token (eg: using a data theft mobile malware applications) and uses it, the loss is still limited.

However there is still a chance that hacker can make a fraudulent purchase using the stolen token in the hacker's mobile device. And the loss can be higher if such an attack (stealing token from a valid user's mobile wallet and using it in hacker's phone) is performed on many user's mobile wallet.

Until now such a fraudulent purchase can be mitigated by asking user to enter PIN in the POS terminal for each transaction however, this tends to affect user experience, even if the PIN/Password is requested selectively or requested only for certain situations or certain transactions.

At the same time, if the authentication requires the use of tamper resistance hardware on the phone, the same increases the deployment complexity as provisioning the authentication application will increase cost and involve additional player into the mobile payment ecosystem. This method proved to be a failure so far across the world.

Approaches such as, relying upon biometric data for authentication also has not found vide acceptance as biometric sensors are required on the mobiles phones, will increase the cost of the phone this inhibiting adoption.

In yet another proposed methodology, a token is used in such vulnerable payment system in place of the original card details to limit the risk of exposure of critical payment account details. But this token can be copied by a malware and another hacker phone can use this token to make the payment "as a strong user identification is not tied with the token".

While, mobile payments had been around for few years but it has not really picked up. With Host Card Emulation the mobile payments deployment is simplified and hence expected to increase mobile payment adoption. However lack of strong authentication and user identification techniques will become a hurdle thus hurting the pace of adoption. In other words, mobile payments adoption rate will not reach its full potential as security concerns would continue to haunt the ecosystem.

So there is a clear need to somehow link the token strongly to the mobile device to which it was provisioned for using during payment operations such that if the same token was used in a different mobile device to perform a payment operation, the token would not work or such a misuse can easily be detected by the issuer authorization system. Thus, there is an unmet need to securely authenticate the mobile wallet user who performs the proximity mobile payment on a POS terminal without requiring the user to make additional steps.

### Summary of the Invention:

Accordingly, the present invention provides a transaction verification system, comprising:
a first communication port operable to receive a first data set relating to a transaction from a contactless point of sale device, the first dataset comprising a transaction identifier;
a second communication port operable to receive a second data set relating to the transaction from a mobile device vide a telecom service provider, the second data set comprising the transaction identifier and the mobile device identifier;
a processor operable to:
   receive the first data set and the second data set;
   extract the transaction identifier from the first data set;
   determine a predetermined mobile device identifier on the basis of the transaction identifier thus extracted;
   extract the transaction identifier and the mobile device identifier from the second data set;
   compare the transaction identifier as extracted from the first data set with the transaction identifier as extracted from the second data set;
   compare the mobile device identifier as extracted from the second data set with the mobile device identifier as determined, if comparison of the transaction identifiers yield a positive result; and
   send an accept payment authorization response to the contactless point of sale device, if comparison of the mobile device identifiers yield a positive result.

The present invention additionally provides a method for verifying a transaction, comprising:
receiving, by a first communication port forming part of a transaction verification system, a first data set relating to a transaction from a contactless point of sale device, the first dataset comprising a transaction identifier;
receiving, by a second communication port forming part of the transaction verification system, a second data set comprising the transaction identifier and a mobile device identifier, the second data set being received from a mobile device vide a telecom service provider;
extracting, by a processor forming part of the transaction verification system, the transaction identifier from the first data set;
determining, by the processor, a predetermined mobile device identifier on the basis of the transaction identifier thus extracted;
extracting, by the processor, the transaction identifier and the mobile device identifier from the second data set;
comparing, by the processor, the transaction identifier as extracted from the first data set with the transaction identifier as extracted from the second data set;
comparing, by the processor, the mobile device identifier as extracted from the second data set with the mobile device identifier as determined, if comparison of the transaction identifiers yield a positive result; and
sending, by the transaction verification system, an accept payment authorization response to the contactless point of sale device, if comparison of the mobile device identifiers yield a positive result.

The present invention furthermore provides a mobile device for performing a transaction, said device comprising:
a near field communication sub-system for establishing a near field communication with a contactless point of sale device and for initiating a transaction;
the near field communication sub-system being further adapted to receive a transaction identifier from the point of sale device at an intermediate stage of the transaction;
a message generation sub-system for generating a message including the transaction identifier, said message being generated prior to a completion of the transaction between the near field communication system and the point of sale device; and
a communication sub-system for initiating transmission of the message including the transaction identifier to a transaction verification system vide a telecom network prior to completion of the transaction between the near field communication system and the point of sale device.

The invention additionally provides a method for performing a transaction, said method comprising:
establishing, by a near field communication sub-system forming part of a mobile device, a communication with a contactless point of sale device and initiating a transaction;
receiving, by the near field communication sub-system, a transaction identifier from the point of sale device at an intermediate stage of the transaction;
generating, by a message generation sub-system forming part of the mobile device, a message including the transaction identifier, said message being generated prior to a completion of the transaction between the near field communication system and the point of sale device; and
initiating, prior to completion of the transaction between the near field communication system and the point of sale device, transmission of the message including the transaction identifier by the mobile device to a transaction verification system vide a telecom network.

It can be noticed that the transaction in accordance with the teachings of the present invention proceeds without involving user in the second factor "what I know" or "what I am" as holding the mobile wallet is the first factor - "what I have".

Furthermore, the transaction can be verified in accordance with the teachings of the present invention without delaying or prolonging the tap time, without incurring significant economic costs (as the invention reuses the common and existing handset and network infrastructure with least amount of modification), and without any change in the intermediate payment network which is not at the control of the Issuer.

It is also believed that even if a hacker steals a token from a phone and uses in the hacker's phone, such fraud would still be detected in an economic fashion without causing inconvenience to the legitimate users.

### Brief Description of Figures:

These and other features, aspects, and advantages of the present invention will become better understood when the following detailed description is read with reference to the accompanying drawings in which like characters represent like parts throughout the drawings, wherein:
Figure 1 shows flow chart of the transaction verification method as performed by the transaction verification system;
Figure 2 shows the flow chart of the method as performed by a mobile device during the transaction;
Figure 3 illustrates a block diagram of the transaction verification system which performs the method illustrated in figure 1; and
Figure 4 illustrates a block diagram of the mobile device which performs the method illustrated in figure 2.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### Detailed Description:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skill in the art to which this invention belongs. The system, methods, and examples provided herein are illustrative only and not intended to be limiting.

Embodiments of the present invention will be described below in detail with reference to the accompanying drawings.

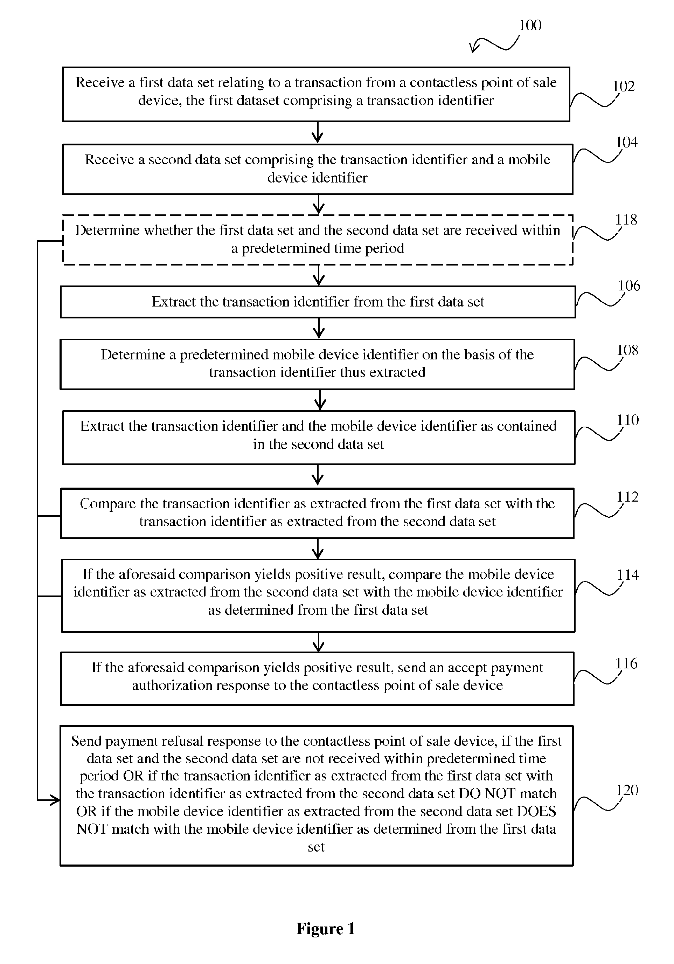

Now referring to figure 1, it can be seen that the invention provides a method (100) for verifying a transaction. In a preferred aspect of the invention, the method comprises a step of receiving (102), by a first communication port forming part of a transaction verification system, a first data set relating to a transaction from a contactless point of sale device, the first dataset comprising a transaction identifier. In yet another step, which is independent of receiving first data set, the transaction verification system receives (104) at a second communication port, a second data set comprising the transaction identifier and a mobile device identifier. The second data set being received from a mobile device vide a telecom service provider.

In response to the transaction verification system receiving the first data set, a processor forming part of the transaction verification system, extracts (106) the transaction identifier from the first data set. The processor then determines (108) a predetermined mobile device identifier on the basis of the transaction identifier thus extracted. For the purposes of the above, the processor may refer to a database which can contain the predetermined mobile device identifier corresponding to the transaction identifier.

In response to the transaction verification system receiving the second data set, the processor extracts (110) the transaction identifier and the mobile device identifier as contained in the second data set.

The transaction verification system and more particularly the processor, proceeds to comparing (112) the transaction identifier as extracted from the first data set with the transaction identifier as extracted from the second data set.

It can be noted that there can be two results for the aforesaid comparison step, namely the transaction identifier transaction identifier as extracted from the first data set matches with the transaction identifier as extracted from the second data set, in which case, a positive result is said to be obtained. In the alternative, the transaction identifier transaction identifier as extracted from the first data set DOES NOT match with the transaction identifier as extracted from the second data set, in which case, a negative result is said to be obtained.

In case the strep of comparing the transaction identifier as extracted from the first data set with the transaction identifier as extracted from the second data set yields a positive result, the processor proceeds to comparing (114) the mobile device identifier as extracted from the second data set with the mobile device identifier as determined in step 108.

It can be noted that there can be two results for the aforesaid comparison step (114), namely the mobile device identifier as extracted from the second data set matches with the mobile device identifier as determined in step 108, in which case, a positive result is said to be obtained. In the alternative, mobile device identifier as extracted from the second data set DOES NOT MATCH with the mobile device identifier as determined in step 108, in which case, a negative result is said to be obtained.

In case the comparing step (114) (i.e. the step of comparing the mobile device identifiers) yields a positive result, the transaction verification system sends (116) an accept payment authorization response to the contactless point of sale device.

In a preferred aspect, the second data set and the first data set are receiving by the transaction verification system within a time period which may be prescribed by the transaction verification system as the higher time limit, within which the transaction must be verified. In a preferred aspect, the method may further comprise determining (118) whether the first data set and the second data set are received within a predetermined time period.

In case the first data set and the second data set are not received within predetermined time period OR if the transaction identifier as extracted from the first data set with the transaction identifier as extracted from the second data set DO NOT match OR if the mobile device identifier as extracted from the second data set DOES NOT match with the mobile device identifier as determined from the first data set, then as illustrated in step (120), the transaction verification system can send a payment refusal response to the contactless point of sale device.

It may be noted that the mode of communication between the transaction verification system and the point-of-sale device needs not be a direct communication and can involve one or more intermediate devices, which may be conventionally present.
It is to be noted that the mode of communication between the transaction verification system and the mobile device is not the same as the mode of communication between the point of sale device and the transaction verification system. In other words, the second data set is not received by the transaction verification system from the mobile device vide the POS device. In a preferred aspect, the transaction verification system receives the second data set vide a mobile network to which the mobile device is subscribed.

It is to be noted that since the receipt of the second data set is NOT dependent upon receipt of the first data set, it is possible that the transaction verification system receives the second data set prior to receiving the first data set. However, it can be noticed that sending of the accept payment authorization response by the transaction verification system is conditioned upon receiving the first and the second data by the transaction verification system and both of the comparisons (as performed by the transaction verification system) yielding positive result.

Although not illustrated in figure 1, in a preferred aspect of the invention, the transaction identifier as received by the transaction verification system from the mobile device can be in the form of an irreversible one way hash value (i.e. the second data set comprises an irreversible one way hash value of the transaction identifier). In such a scenario, the transaction verification system provides the transaction identifier extracted from the first data set (preferably after the same has been used for determining the mobile device identifier) to a cryptographic device. The cryptographic device derives an irreversible one way hash value for the transaction identifier extracted from the first data set and provides the same to the transaction verification system. The transaction verification system is then configured to compare the irreversible one way hash value of the transaction identifier as derived from the first data set with the irreversible one way hash value of the transaction identifier as extracted from the second data set.

In yet another preferred aspect, the second data set can be encrypted by the telecom operator (independent of the encryption done at the mobile device side) prior to sending the second data set to the transaction verification system. In case, the telecom operator performs such an encryption, the transaction verification system will perform the corresponding decryption to obtain the second data set.

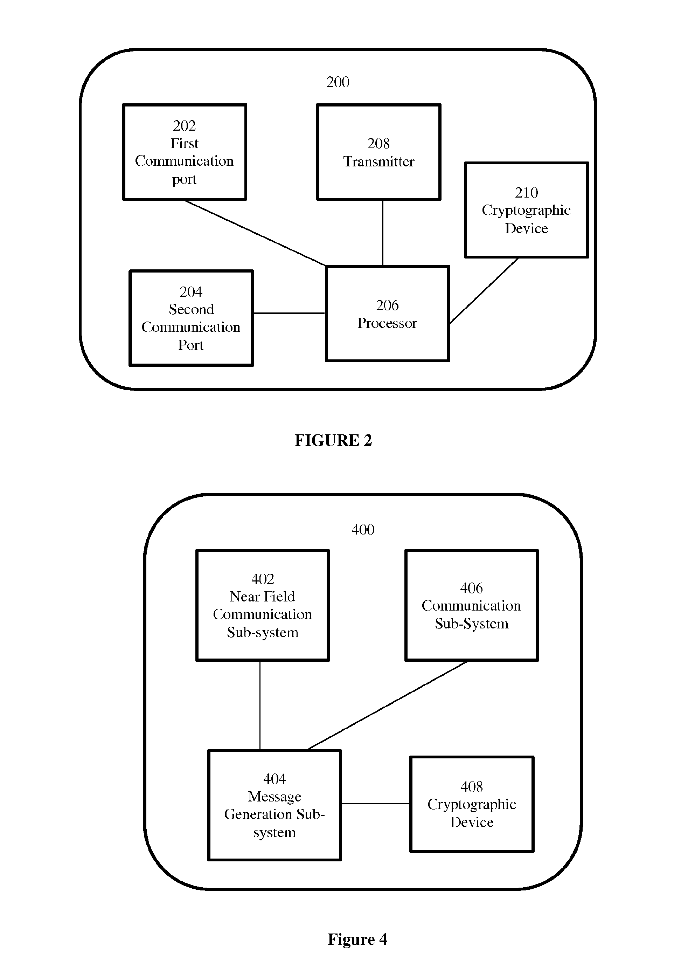

Now referring to figure 2, there is illustrated a block diagram of a transaction verification system (200) that implements the above process. It can be seen that the transaction verification system comprises:
a first communication port (202) operable to receive a first data set relating to a transaction from a contactless point of sale device, the first dataset comprising a transaction identifier;
a second communication port (204) operable to receive a second data set relating to the transaction from a mobile device vide a telecom service provider, the second data set comprising the transaction identifier and the mobile device identifier; and
a processor (206) operable to:
   receive the first data set and the second data set;
   extract the transaction identifier from the first data set;
   determine a predetermined mobile device identifier on the basis of the transaction identifier thus extracted;
   extract the transaction identifier and the mobile device identifier from the second data set;
   compare the transaction identifier as extracted from the first data set with the transaction identifier as extracted from the second data set;
   compare the mobile device identifier as extracted from the second data set with the mobile device identifier as determined, if comparison of the transaction identifiers yield a positive result; and
   send an accept payment authorization response to the contactless point of sale device, if comparison of the mobile device identifiers yield a positive result.

For the purposes of sending the accept payment authorization response, the transaction verification system (200) may further include a transmitter (208).

In case the second data set received by the transaction verification system includes the transaction identifier in the form of an irreversible one way hash value, the transaction verification system can engage a cryptographic device (210), which may be external to the transaction verification system or may form part of the transaction verification system for deriving an irreversible one way hash value for the transaction identifier extracted from the first data set. In such case, the processor (206) is configured to compare the irreversible one way hash value of the transaction identifier as derived from the first data set with the irreversible one way hash value of the transaction identifier as extracted from the second data set.

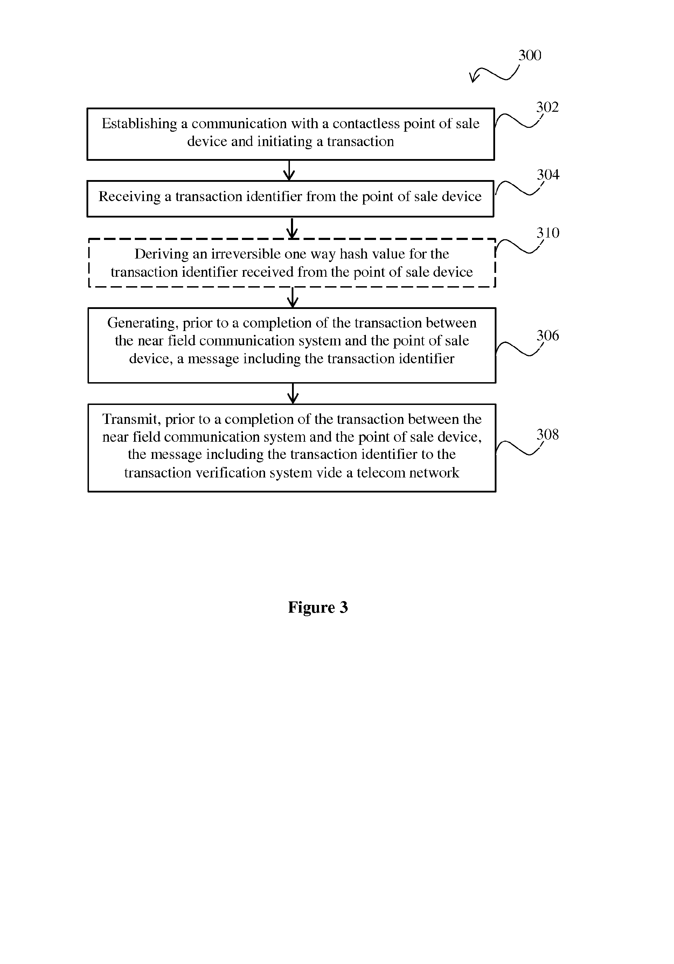

Now referring to figure 3, there is illustrated a flow chart of the method (300) as performed by a mobile device for verifying a transaction. In a preferred aspect of the invention, the method comprises a step of establishing (302), by a near field communication sub-system forming part of a mobile device, a communication with a contactless point of sale device and initiating a transaction. At an intermediate stage of the transaction, the mobile device receives (304), a transaction identifier from the point of sale device. The mobile device then generates (306), a message including the transaction identifier, said message being generated prior to a completion of the transaction between the near field communication system and the point of sale device. The mobile device then initiates (308), prior to completion of the transaction between the near field communication system and the point of sale device, transmission of the message including the transaction identifier by the mobile device to the transaction verification system vide a telecom network.

It may be noted that the user is not involved in generation of the message thus generated at the mobile device and similarly, the user is not involved in transmission of the message thus generated. In a preferred embodiment, the message is not made available to the user prior to its transmission. Even for the purposes of enabling transmission, the destination address (i.e. the address of the transaction verification system) is automatically fed and sent to the telecom network. The message thus generated and transmitted can be any of a SMS or a USSD or an Internet Protocol (IP) based message or the like.

In a preferred aspect of the invention, the method further comprises deriving (310) an irreversible one way hash value for the transaction identifier received from the point of sale device. In the aforesaid scenario, the message thus generated includes the irreversible one way hash value obtained in respect of the transaction identifier received from the point of sale device.

Now referring to figure 4, there is illustrated a block diagram of the mobile device (400) that is adapted to perform the method as depicted in figure 3. The mobile device comprises a near field communication sub-system (402) for establishing a near field communication with a contactless point of sale device and for initiating a transaction, the near field communication sub-system being further adapted to receive a transaction identifier from the point of sale device at an intermediate stage of the transaction. The mobile device further includes a message generation sub-system (404) for generating a message including the transaction identifier, said message being generated prior to a completion of the transaction between the near field communication system and the point of sale device. Finally the mobile device includes a communication sub-system (406) for initiating transmission of the message including the transaction identifier to a transaction verification system vide a telecom network prior to prior to completion of the transaction between the near field communication system and the point of sale device. It is possible that the message generation sub-system (404) is implemented in one or more processor as may be available in the mobile device or in a separate processor.

In a preferred aspect of the invention, the mobile device further comprises a cryptographic device (408) for deriving an irreversible one way hash value for the transaction identifier received from the point of sale device. In the aforesaid scenario, the message generation sub-system generates a message including the irreversible one way hash value obtained in respect of the transaction identifier received from the point of sale device.

It may be further noted that the invention as described above can be implemented during any of the usual transaction operation (be it according to EMV standard or send track1/track2 Magn Swipe Data) with the contactless POS and the payment network works as usual sending the data sent by Mobile wallet /POS to the issuing bank for payment authorization.

At the same time when the mobile device makes a tap and generates the transaction data for the purpose of getting it authorized by issuer bank, some parts or all of this transaction data will be sent by the mobile device itself to the issuing bank in a separate channel outside the traditional payment network (which is vide the POS device). This separate channel is a mobile telecommunication provider network. We call this "out of band authorization request" for naming convention sake. The out of band authorization request can be in the form of any of SMS, USSD or IP data.

It can be observed that all mobile telecommunication provider network have the existing capability of automatically discovering and adding the MSISDN of the handset that sent this "out of band authorization request" when forwarding such a request to the issuing bank. It can be observed that such a forwarded request can be encrypted by the telecom operator independent to the encryption done at the mobile device side. It is believed that the possibility of an un-authorized user being in a position to control the process of the mobile telecommunication provider network "automatically discovering and adding the MSISDN to the message which is destined to the transaction verification system", is substantially less and it complicates the attack vector and increases the efforts for the hacker as the hacker now has to do many work than just steal the token as it now forces the hacker to either clone the victim's SIM or transmit by mimicking the same source IP as the telecom operator by also incorporating the victim's MSISDN in the same manner in which the operator will incorporate, including performing the same encryption technique used by the telecom operator when forwarding the enriched request to the issuer system.

The transaction verification system will match the transaction data arrived from both channels i.e., from the regular the payment network via POS and from the mobile telecommunication provider network. With the help of transaction data received from payment network the issuing bank system retrieves the MSISDN registered for that credit card account identified from then transaction data. Let us call this "Registered MSISDN". With the MSISDN (Let us call it as "Current MSISDN") received from the telco network as part of the transaction data, once this transaction data matches the transaction data received from Payment Network, the "Registered MSISDN" and the "Current MSISDN" is compared.
If the MSISDN's match then the user is the original user who own's the wallet and the token is actually coming from the wallet that the user actually owns. Because of the above, it can be said that there is an independent verification being performed and hence, the authentication of the mobile wallet user who performs the proximity mobile payment on a POS terminal is improved in terms security.

While specific language has been used to describe the disclosure, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. A transaction verification system, comprising:
a first communication port operable to receive a first data set relating to a transaction from a contactless point of sale device, the first dataset comprising a transaction identifier;
a second communication port operable to receive a second data set relating to the transaction from a mobile device vide a telecom service provider, the second data set comprising the transaction identifier and the mobile device identifier;
a processor operable to:
receive the first data set and the second data set;
extract the transaction identifier from the first data set;
determine a predetermined mobile device identifier on the basis of the transaction identifier thus extracted;
extract the transaction identifier and the mobile device identifier from the second data set;
compare the transaction identifier as extracted from the first data set with the transaction identifier as extracted from the second data set;
compare the mobile device identifier as extracted from the second data set with the mobile device identifier as determined, if comparison of the transaction identifiers yield a positive result; and
send an accept payment authorization response to the contactless point of sale device, if comparison of the mobile device identifiers yield a positive result.

2. The transaction verification system as claimed in claim 1, wherein the second data set includes the transaction identifier in the form of an irreversible one way hash value.

3. The transaction verification system as claimed in claim 2, further comprising a cryptographic device for deriving an irreversible one way hash value for the transaction identifier extracted from the first data set.

4. The transaction verification system as claimed in claim 3, wherein the processor is configured to compare the irreversible one way hash value of the transaction identifier as derived from the first data set with the irreversible one way hash value of the transaction identifier as extracted from the second data set.

5. The transaction verification system as claimed in claim 1, wherein the processor is further adapted to test a time difference between receipt of the second data set and the first data set and conditioning the step of sending the accept payment authorization response subject to the time difference is within a predefined limit.

6. A method for verifying a transaction, comprising:
receiving, by a first communication port forming part of a transaction verification system, a first data set relating to a transaction from a contactless point of sale device, the first dataset comprising a transaction identifier;
receiving, by a second communication port forming part of the transaction verification system, a second data set comprising the transaction identifier and a mobile device identifier, the second data set being received from a mobile device vide a telecom service provider;
extracting, by a processor forming part of the transaction verification system, the transaction identifier from the first data set;
determining, by the processor, a predetermined mobile device identifier on the basis of the transaction identifier thus extracted;
extracting, by the processor, the transaction identifier and the mobile device identifier from the second data set;
comparing, by the processor, the transaction identifier as extracted from the first data set with the transaction identifier as extracted from the second data set;
comparing, by the processor, the mobile device identifier as extracted from the second data set with the mobile device identifier as determined, if comparison of the transaction identifiers yield a positive result; and
sending, by the transaction verification system, an accept payment authorization response to the contactless point of sale device, if comparison of the mobile device identifiers yield a positive result.

7. The method as claimed in claim 6, wherein receiving of the second data set is independent of receiving of the first data set.

8. The method as claimed in claim 6, further comprising testing by the transaction verification system a time difference between receipt of the second data set and the first data set and conditioning the step of sending the accept payment authorization response subject to the time difference is within a predefined limit.

9. The method as claimed in claim 6,
a. wherein the second data set is transmitted vide any of a SMS or a USSD or an Internet Protocol (IP) based message or the like, or
b. wherein the second data set includes the transaction identifier in the form of an irreversible one way hash value.

10. The method as claimed in claim 9, further comprising deriving an irreversible one way hash value for the transaction identifier extracted from the first data set.

11. The method as claimed in claim 10, wherein comparing includes comparing the irreversible one way hash value of the transaction identifier as derived from the first data set with the irreversible one way hash value of the transaction identifier as extracted from the second data set.

12. A mobile device for performing a transaction, said device comprising:
a near field communication sub-system for establishing a near field communication with a contactless point of sale device and for initiating a transaction;
the near field communication sub-system being further adapted to receive a transaction identifier from the point of sale device at an intermediate stage of the transaction;
a message generation sub-system for generating a message including the transaction identifier, said message being generated prior to a completion of the transaction between the near field communication system and the point of sale device; and
a communication sub-system for initiating transmission of the message including the transaction identifier to a transaction verification system vide a telecom network prior to completion of the transaction between the near field communication system and the point of sale device.

13. The mobile device as claimed in claim 12,
a. further comprising a cryptographic device for deriving an irreversible one way hash value for the transaction identifier received from the point of sale device, or
b. wherein the message generation sub-system generates a message including the irreversible one way hash value obtained in respect of the transaction identifier received from the point of sale device.

14. A method for performing a transaction, said method comprising:
establishing, by a near field communication sub-system forming part of a mobile device, a communication with a contactless point of sale device and initiating a transaction;
receiving, by the near field communication sub-system, a transaction identifier from the point of sale device at an intermediate stage of the transaction;
generating, by a message generation sub-system forming part of the mobile device, a message including the transaction identifier, said message being generated prior to a completion of the transaction between the near field communication system and the point of sale device; and
initiating, prior to completion of the transaction between the near field communication system and the point of sale device, transmission of the message including the transaction identifier by the mobile device to a transaction verification system vide a telecom network.

15. The method as claimed in claim 14,
a. further comprising deriving an irreversible one way hash value for the transaction identifier received from the point of sale device, or
b. wherein generating the message comprises generation a message including the irreversible one way hash value obtained in respect of the transaction identifier received from the point of sale device.
